(19) Europäisches Patentamt / European Patent Office / Office européen des brevets

(11) **EP 3 024 001 A1**

(12) **EUROPEAN PATENT APPLICATION**
published in accordance with Art. 153(4) EPC


(43) Date of publication:
**25.05.2016 Bulletin 2016/21**

(21) Application number: **14826672.9**

(22) Date of filing: **16.07.2014**

(51) Int Cl.:
***H01F 7/06*** (2006.01) ***H01F 7/08*** (2006.01)

(86) International application number:
**PCT/JP2014/068914**

(87) International publication number:
**WO 2015/008793 (22.01.2015 Gazette 2015/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.07.2013 JP 2013148848**



(71) Applicants:
- **TOYOTA JIDOSHA KABUSHIKI KAISHA**
  **Toyota-shi, Aichi-ken 471-8571 (JP)**
- **Toyota School Foundation**
  **Nagoya-shi, Aichi-ken 468-8511 (JP)**

(72) Inventors:
- **OKADA, Hiroshi**
  **Toyota-shi**
  **Aichi 471-8571 (JP)**
- **KEINO, Hiroki**
  **Toyota-shi**
  **Aichi 471-8571 (JP)**
- **SAKURAI, Takahiro**
  **Toyota-shi**
  **Aichi 471-8571 (JP)**
- **KOJIMA, Takashi**
  **Nagakute-shi**
  **Aichi 480-1192 (JP)**
- **MURAMATSU, Junya**
  **Nagakute-shi**
  **Aichi 480-1192 (JP)**
- **HATTORI, Yoshiyuki**
  **Nagakute-shi**
  **Aichi 480-1192 (JP)**
- **FUJISAKI, Keisuke**
  **Nagoya-shi**
  **Aichi 468-8511 (JP)**

(74) Representative: **Winter, Brandl, Fürniss, Hübner, Röss, Kaiser, Polte - Partnerschaft mbB**
**Patent- und Rechtsanwaltskanzlei**
**Alois-Steinecker-Strasse 22**
**85354 Freising (DE)**


# (54) ELECTROMAGNETIC COIL DEVICE


(57) A task is to provide an electromagnetic coil device capable of decreasing a surge voltage generated in an electromagnetic coil without providing a surge voltage decreasing diode.

Provided are an electromagnetic coil in which a coil wire is wound; a first electric conductor installed around the electromagnetic coil, the first electric conductor being electrically insulated from the electromagnetic coil; and a second electric conductor installed in the first electric conductor or installed between the first electric conductor and the electromagnetic coil, the second electric conductor being electrically insulated from the electromagnetic coil, and being installed in such a manner as to have an eddy current flowing therethrough when a current flowing through the electromagnetic coil changes.


FIG.2

1
8
7c
11
7
12
10
5
5a
ROTATIONAL
AXIS SIDE


EP 3 024 001 A1

## Description

TECHNICAL FIELD

The present invention relates to a technology to decrease a surge voltage generated when a current flowing through an electromagnetic coil in an electromagnetic coil device changes in a step manner.

BACKGROUND ART

When energization of an electromagnetic coil device including an electromagnetic coil such as an electromagnetic clutch, an electromagnetic brake, or so, is broken, a current flowing through the electromagnetic coil changes in a step manner, and a great surge voltage (a back electromotive force) is generated across the electromagnetic coil. Thereby, a problem occurs such that another device connected to the electromagnetic coil device is damaged, or so. Therefore, a technology has been used to decrease such a surge voltage occurring in an electromagnetic coil device (for example, Patent Reference 1).

Patent Reference 1 discloses a technology to decrease a surge voltage by connecting a diode to an electromagnetic coil in parallel.

PRIOR ART REFERENCE

PATENT REFERENCE

PATENT REFERENCE 1 Japanese Laid-Open Patent Application No. 10-037978

SUMMARY OF THE INVENTION

PROBLEM TO BE SOLVED BY THE INVENTION

However, when a diode is additionally installed as in Patent Reference 1, the manufacturing cost, and so forth, increases especially due to a fact that preciseness is required to positively wire the diode, in addition to a cost increase due to the addition of the diode. Thus, a problem concerning the cost may occur. Also, if, for example, a diode is installed inside a housing of an electromagnetic clutch in order to connect the diode to an electromagnetic coil in parallel, a problem concerning a required layout space, a restriction concerning the structure, or so, occurs.

In consideration of the above-mentioned problem, an object is to provide an electromagnetic coil device capable of decreasing a surge voltage generated in an electromagnetic coil without providing a surge voltage decreasing diode.

MEANS TO SOLVE THE PROBLEM

In order to achieve the object, in one embodiment, an electromagnetic coil device includes
an electromagnetic coil in which a coil wire is wound;
a first electric conductor installed around the electromagnetic coil, the first electric conductor being electrically insulated from the electromagnetic coil; and
a second electric conductor installed in the first electric conductor or installed between the first electric conductor and the electromagnetic coil, the second electric conductor being electrically insulated from the electromagnetic coil, and being installed in such a manner as to have an eddy current flowing therethrough when a current flowing through the electromagnetic coil changes.

ADVANTAGEOUS EFFECTS OF THE INVENTION

According to the embodiment, it is possible to provide an electromagnetic coil device capable of decreasing a surge voltage generated in an electromagnetic coil without providing a surge voltage decreasing diode.

BRIEF DESCRIPTION OF DRAWINGS

FIG. 1 is a general sectional view of an electromagnetic clutch 1.
FIG. 2 is a sectional view showing a detailed structure around an electromagnetic coil 10 of the electromagnetic clutch 1 according to a first embodiment.
FIG. 3A shows a current flowing through the electromagnetic coil 10 and generated magnetic fluxes, when power is being supplied to the electromagnetic coil 10.
FIG. 3B shows a current flowing through the electromagnetic coil 10, eddy currents generated in an electromagnetic coil housing 5 (including a copper film 12), a rotor 7, and a clutch plate 8, and generated magnetic fluxes, when the power supply to the electromagnetic coil 10 is broken.
FIG. 3C schematically shows a direction in which the eddy current generated when the power supply to the electromagnetic coil 10 is broken flows.
FIG. 4 shows a surge voltage generated in the electromagnetic coil 10 of the electromagnetic clutch 1 according to the first embodiment.
FIG. 5A shows relationships between the thickness of the copper film 12 and the surge voltage generated in the electromagnetic coil 10.
FIG. 5B shows relationships between the thickness of the copper film 12 and the eddy current amount flowing through the copper film 12.
FIG. 6 shows relationships between the arrangement of the copper film 12 and the surge voltage generated in the electromagnetic coil 10.
FIG. 7A is a schematic diagram of an electromagnetic coil 10 and a copper film 12 of an electromagnetic clutch 1 according to a variant 1 of the first embodiment.

FIG. 7B is a schematic diagram of an electromagnetic coil 10 and a copper film 12 of an electromagnetic clutch 1 according to a variant 1 of the first embodiment.

FIG. 8A is a schematic diagram of an electromagnetic coil 10 and a copper film 12 of an electromagnetic clutch 1 according to a variant 2 of the first embodiment.

FIG. 8B is a schematic diagram of an electromagnetic coil 10 and a copper film 12 of an electromagnetic clutch 1 according to a variant 2 of the first embodiment.

FIG. 9 is a sectional view showing a detailed structure around an electromagnetic coil 10 of an electromagnetic clutch 1 according to a second embodiment.

FIG. 10A is a schematic diagram of an electromagnetic coil 10 and a copper film 122 of an electromagnetic clutch 1 according to a variant of the second embodiment.

FIG. 10B is a schematic diagram of an electromagnetic coil 10 and a copper film 122 of an electromagnetic clutch 1 according to a variant of the second embodiment.

FIG. 11 is a sectional view showing a detailed structure around an electromagnetic coil 10 of an electromagnetic clutch 1 according to a third embodiment.

FIG. 12 shows relationships between the electric resistivity of an electromagnetic coil housing 5, a rotor 7, and a clutch plate 8, and the surge voltage generated in the electromagnetic coil 10.

FIG. 13 shows relationships between the saturation magnetization value of the electromagnetic coil housing 5, the rotor 7, and the clutch plate 8, and the surge voltage generated in the electromagnetic coil 10.

FIG. 14A shows a variant of the shape of the electromagnetic coil 10.

FIG. 14B shows a variant of the shape of the electromagnetic coil 10.

## DESCRIPTION OF EMBODIMENTS

Below, embodiments of the invention will be described using the drawings.

### [First Embodiment]

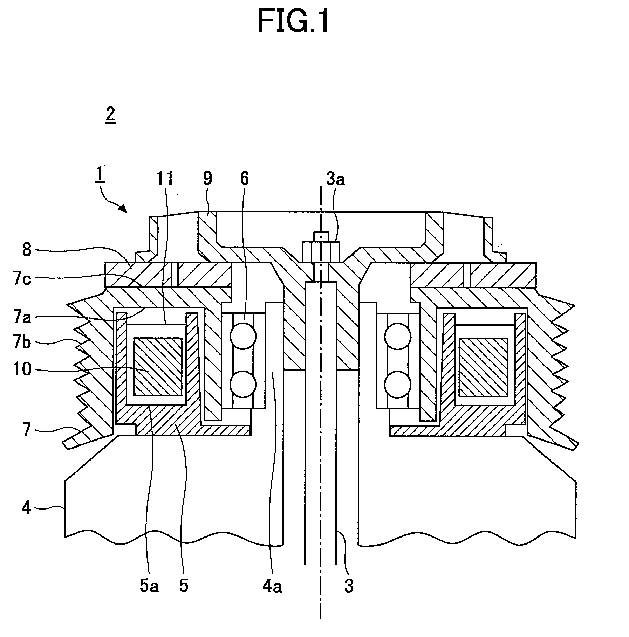

FIG. 1 is a general sectional view showing a structure of an electromagnetic clutch 1 according to the present embodiment.

As shown in FIG. 1, the electromagnetic clutch 1 according to the present embodiment is installed in a car air-conditioner compressor 2. The power from a crank pulley of an engine (not shown) is transmitted to the car air-conditioner compressor 2, and the car air-conditioner compressor 2 is driven and rotated. In order to transmit the transmitted rotational power to a rotating shaft 3 of the car air-conditioner compressor 2 only when an air conditioner is used, the electromagnetic clutch 1 has a function of transmitting the rotational power and breaking the transmission.

The electromagnetic clutch 1 includes an electromagnetic coil housing 5, a rotor 7, a clutch plate 8, a clutch hub 9, an electromagnetic coil 10, an insulating member 11, and so forth.

The electromagnetic coil housing 5 is fixed to a housing 4 of the car air-conditioner compressor 2. The entirety of the electromagnetic coil housing 5 is shaped like a ring, and is placed to be coaxial with the rotating shaft 3 of the car air-conditioner compressor 2. The electromagnetic coil housing 5 is inserted in an annular groove part 7a formed in the rotor 7 described later. The electromagnetic coil housing 5 has an annular groove part 5a, and, the electromagnetic coil 10 described later is inserted in the groove part 5a. The electromagnetic coil housing 5 is manufactured through, for example, press working, or such, using SPCC (Steel Plate Cold Commercial). Note that SPCC is a general-purpose cold rolled steel sheet prescribed in JIS (Japanese Industrial Standards).

The rotor 7 is rotatably supported by a cylindrical part 4a of the housing 4 of the car air-conditioner compressor 2 via a bearing 6. The rotor 7 has pulley grooves 7b formed in an outer circumferential part thereof. A belt is wound onto the pulley grooves 7b, and the rotational power of a crank pulley of the engine having the belt wound thereonto in the same way is transmitted to the rotor 7. The rotor 7 has, as described above, the electromagnetic coil housing 5 inserted in the groove part 7a, and is rotated in such a state that the electromagnetic coil housing 5 is inserted in the groove part 7a. On one end face of the rotor 7 in its rotational axis direction, a friction surface 7c is installed to face a clutch plate 8. The rotor 7 is manufactured through press working or such using SPCC or such.

The clutch plate 8 is fixed to a clutch hub 9. When the clutch plate 8 is in contact with the above-described the friction surface 7c of the rotor 7, the rotational power transmitted to the rotor 7 can be transmitted to the rotating shaft 3 of the car air-conditioner compressor 2 via the clutch hub 9 due to the generated friction force. The clutch plate 8 is manufactured through press working or such using SPCC or such.

The rotating shaft 3 of the car air-conditioner compressor 2 is inserted in the clutch hub 9, and is fixed thereto with a nut 3a in such a manner as not to be removed. As described above, when the clutch plate 8 is in contact with the friction surface 7c of the rotor 7, the clutch hub 9 transmits the rotational power transmitted to the rotor 7 to the rotating shaft 3 of the car air-conditioner compressor 2 via the clutch plate 8 fixed to the clutch hub 9.

The electromagnetic coil 10 is formed as a result of a coil wire 10a being wound annularly around a predetermined axis (hereinafter, referred to as an electromagnetic coil axis), and is inserted in the annular groove part 5a formed in the electromagnetic coil housing 5. Note that, in the present embodiment, the electromagnetic coil axis approximately corresponds to the rotating shaft 3 of the car air-conditioner compressor 2. The electromagnetic coil 10 is fixed to the electromagnetic coil housing 5 (and a copper film 12 described later) in such a manner as to be electrically insulated therefrom with, for example, an insulating member 11 of polyethylene resin or such. Direct-current power is supplied to the electromagnetic coil 10 from a battery (not shown) mounted in a vehicle, and a current flows therethrough. As a result of the power supply from the battery, the electromagnetic coil 10 acts as an electromagnet. The clutch plate 8 and the clutch hub 9, integrally installed, are attracted by the rotor 7. Thereby, the rotational power transmitted to the rotor 7 is transmitted to the rotating shaft 3 of the car air-conditioner compressor 2 via the clutch plate 8 and the clutch hub 9. As a result of the power supply to the electromagnetic coil 10 being broken, the clutch plate 8 and the clutch hub 9 integrally installed become separated from the rotor 7 due to the reaction force of a clutch damper (not shown), and the transmission of the rotational power from the rotor 7 is broken.

The electromagnetic clutch 1 includes the copper film 12 installed in the electromagnetic coil housing 5.

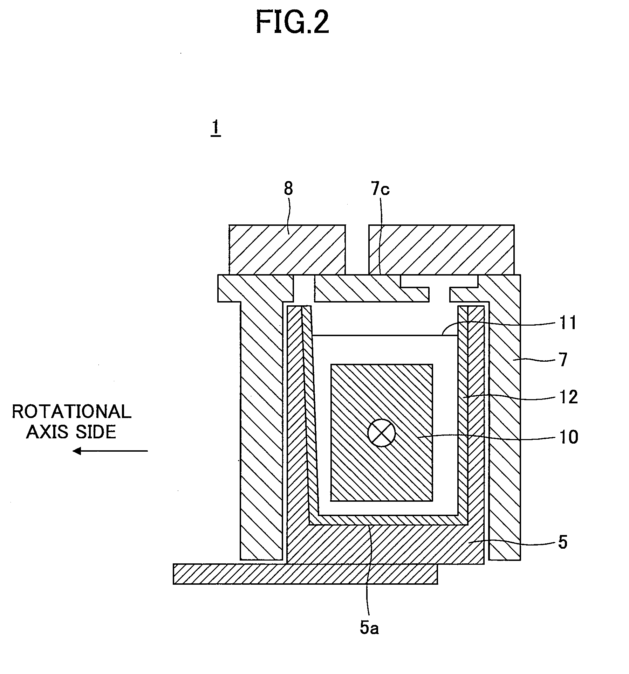

FIG. 2 is a sectional view showing a detailed structure around the electromagnetic coil 10 of the electromagnetic clutch 1 according to the present embodiment. Note that it is assumed that the rotational axis of the rotor 7 is present in the left direction of the drawing. The pulley grooves 7b of the rotor 7 are omitted for the purpose of simplicity.

As shown in FIG. 2, the copper film 12 having a predetermined thickness and made of copper is installed on the two side walls and the bottom surface of the groove part 5a of the electromagnetic coil housing 5. The copper film 12 and the electromagnetic coil 10 are electrically insulated via the insulating member 11. The copper film 12 can be formed as a result of a copper plating process being performed on the inner surfaces of the electromagnetic coil housing 5 (SPCC).

Next, a function of the electromagnetic clutch 1 according to the present embodiment, in particular, the copper film 12, will be described.

First, eddy currents generated in the electromagnetic coil housing 5, the rotor 7, the clutch plate 8, the copper film 12, and, so forth, due to turning on/off of the power supply to the electromagnetic coil 10, will be described.

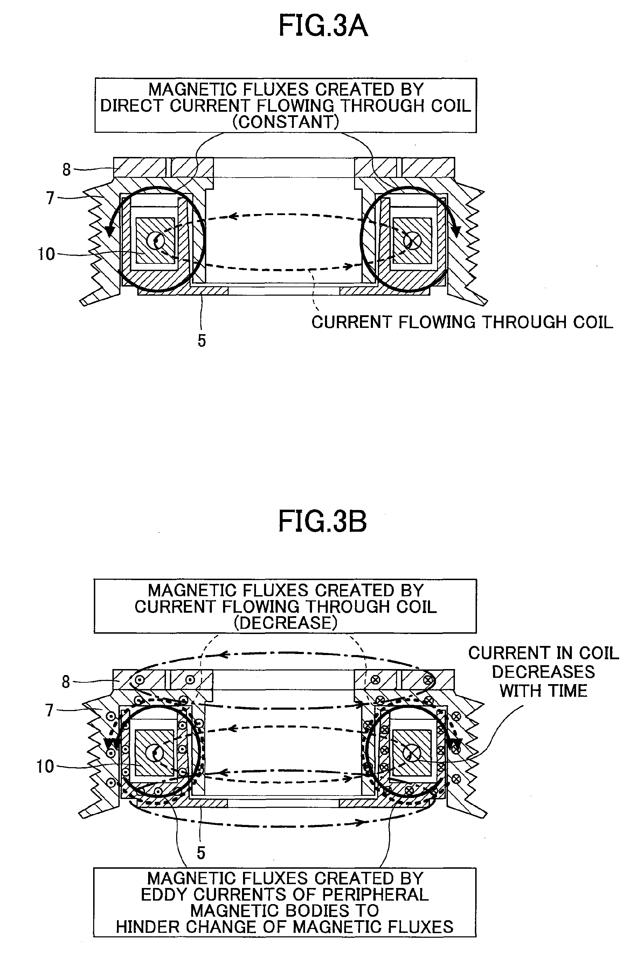

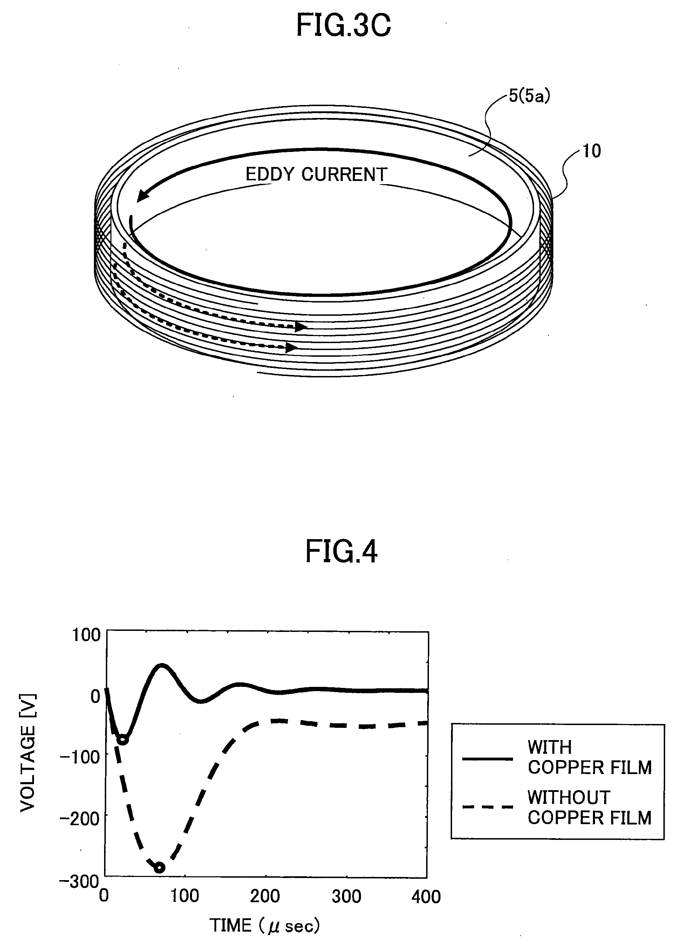

FIGs. 3 (FIGs. 3A to 3C) illustrate eddy currents generated in the electromagnetic clutch 1 according to the first embodiment. FIG. 3A shows the current flowing through the electromagnetic coil 10 and the magnetic fluxes generated when the power is supplied to the electromagnetic coil 10. FIG. 3B shows the current flowing through the electromagnetic coil 10, eddy currents generated in the electromagnetic coil housing 5 (including the copper film 12), the rotor 7, and the clutch plate 8, and a generated magnetic field, when the power supply to the electromagnetic coil 10 is broken. FIG. 3C schematically shows a direction in which the eddy current flows when the power supply to the electromagnetic coil 10 is broken. Note that, in FIG. 3C, for the purpose of illustration, the electromagnetic coil 10 is drawn in a simplified manner, and only one side wall of the groove part 5c of the electromagnetic coil housing 5 is drawn.

As shown in FIG. 3A, when the power is being supplied to the electromagnetic coil 10, a constant direct current, simulatively indicated by a broken-line arrow, flows through the electromagnetic coil 10. Thus, due to the direct current flowing through the electromagnetic coil 10, a static magnetic field is generated, and constant magnetic fluxes indicated by bold solid-line arrows in the drawing are generated. Thereby, the clutch plate 8 can be attracted by the rotor 7, and the electromagnetic clutch 1 can transmit the rotational power transmitted to the rotor 7 to the rotating shaft 3 of the car air-conditioner compressor 2.

In contrast thereto, as shown in FIG. 3B, when the power supply to the electromagnetic coil 10 is broken, the current flowing through the electromagnetic coil 10 sharply decreases with time. Thereby, also the magnetic fluxes generated as a result of the current flowing through the electromagnetic coil 10 sharply decreases (the bold broken-line arrows in the drawing), and therefore, back electromotive force (a surge voltage) based on the Faraday's law of electromagnetic induction is generated. Further, eddy currents are generated in the electromagnetic coil housing 5 (including the copper film 12), the rotor 7, and the clutch plate 8 that are electric conductors around the electromagnetic coil 10, according to the change in the magnetic fluxes passing through the respective electric conductors, due to the decrease in the magnetic fluxes generated as the result of the current flowing through the electromagnetic coil 10. The eddy currents generated in the electromagnetic coil housing 5 (including the copper film 12), the rotor 7, and the clutch plate 8 flow in such a direction as to hinder a change in the magnetic fluxes passing through the respective electric conductors, according to the Lentz's law. Therefore, as shown in FIG. 3C, the eddy current (the bold solid-line arrow in the drawing) flows in a circumferential direction around the same axis (the electromagnetic coil axis) as that of the current flowing through the electromagnetic coil 10 (the bold broken-line arrows in the drawing). Thereby, in FIG. 3B, the magnetic fluxes indicated by the solid-line arrows are generated due to the eddy currents, and therefore, it is possible to make gentler the above-described decrease in the magnetic fluxes generated as a result of the current flowing through the electromagnetic coil 10. That is, it is possible to decrease the surge voltage generated in the electromagnetic coil 10 with the magnetic fluxes generated depending on the eddy currents.

FIG. 4 shows a surge voltage generated in the electromagnetic clutch 1 according to the first embodiment, and shows a change in the voltage generated in the electromagnetic coil 10 with time after the power supply to the electromagnetic coil 10 is broken. The solid line in the graph represents the voltage (for when the copper film 12 is installed) generated in the electromagnetic clutch 1 according to the present embodiment. The broken line represents the voltage for when the copper film 12 is not installed arguendo. In the drawing, the negative voltage represents a surge voltage, and the same way will be applied also to similar graphs used hereinafter.

As shown in FIG. 4, it is seen that, while the surge voltage is approximately 300 V when the copper film 12 is not installed, the surge voltage generated in the electromagnetic clutch 1 according to the present embodiment is decreased to 100 V or less.

When the power supply to the electromagnetic coil 10 is broken, eddy currents flow also through the electromagnetic coil housing 5, the rotor 7, and the clutch plate 8. However, iron that is a ferromagnetic material such as SPCC is used as materials in the electromagnetic coil housing 5, the rotor 7, and the clutch plate 8 (in particular, the rotor 7 and the clutch plate 8) in order to ensure an electromagnetic connecting function that is an inherent function of the electromagnetic clutch 1. Because iron has high electric resistivity (for example, SPCC according to the present embodiment has $1.340\times10^{-7}$ $\Omega$/m), not so great eddy currents can be generated in the electromagnetic coil housing 5, the rotor 7, and the clutch plate 8.

In contrast thereto, the electric resistivity of the copper film 12 is approximately 1/10 that of SPCC (for example, the copper film 12 according to the present embodiment has $1.673\times10^{-8}$ $\Omega$/m). Thus, it is possible to generate a greater eddy current than that of SPCC. Therefore, in the electromagnetic clutch 1 according to the present embodiment, by installing the copper film 12 on the inner surfaces of the annular groove part 5a of the electromagnetic coil housing 5, it is possible to greatly decrease the surge voltage.

By the above-mentioned function, in the electromagnetic clutch 1 according to the present embodiment, it is possible to decrease the surge voltage without installing a surge voltage decreasing diode as in the prior art. Thus, it is possible to solve the problem concerning the cost. Also, it is possible to solve the problems concerning a shortage of the layout space, a restriction concerning the structure, and so forth, otherwise occurring when the diode is installed in the electromagnetic coil housing 5 of the electromagnetic clutch 1. Note that, the cost reduction effect acquired by omitting the diode is greater than the cost increase caused by forming the copper film 12.

Also, the copper film 12 does not have any influence, in a state where the constant direct current flows through the electromagnetic coil 10 (the state where the electromagnetic coil 10 acts as the electromagnet). Therefore, as long as the shape of the electromagnetic coil housing 5 is same, the performance of the electromagnetic clutch 1 can be maintained, and at the same time, a decrease in the surge voltage generated in the electromagnetic coil 10 is aimed.

Although the thickness of the copper film 12 has not been specifically described, the magnitude of the eddy current varies depending on the thickness of the copper film 12, and, along therewith, the surge voltage decreasing effect varies.

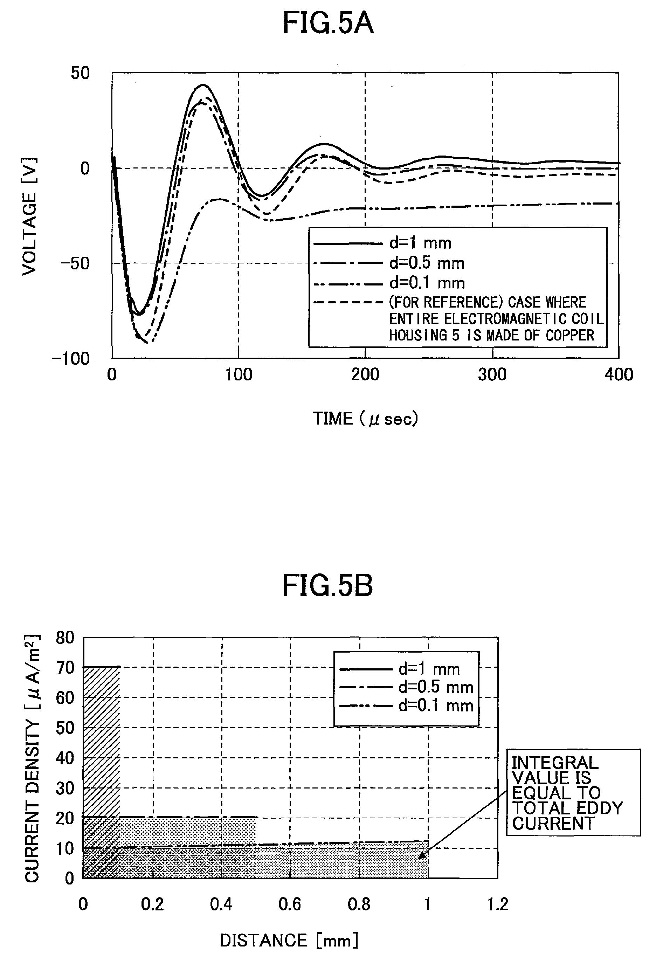

FIGs. 5 (FIGs. 5A and 5B) illustrate relationships between the thickness of the copper film 12 and the surge voltage generated in the electromagnetic coil 10. FIG. 5A shows relationships between the thickness of the copper film 12 and the surge voltage generated in the electromagnetic coil 10, and shows the change in the voltage generated in the electromagnetic coil 10 with time after the power supply to the electromagnetic coil 10 is broken. The solid line shows a case of d=1 mm, the alternate long and short dash line shows a case of d=0.5mm, the alternate long and two short dash line shows a case of d=0.1 mm, and the broken line shows a case where, the entirety of the electromagnetic coil housing 5 is made of copper, where d[mm] denotes the thickness of the copper film 12. FIG. 5B shows relationships between the thickness of the copper film 12 and the eddy current amount flowing through the copper film 12, and has graphs where the ordinate denotes the current density and the abscissa denotes the distance measured from the rear surface of the copper film 12 (the side in contact with the electromagnetic coil housing 5). In the same way as FIG. 5A, the solid line shows a case of d=1 mm, the alternate long and short dash line shows a case of d=0.5 mm, and the alternate long and two short dash line shows a case of d=0.1 mm. The value acquired from integrating each graph (the area of the space defined by the lower part of the graph and the line of the current density 0) represents the eddy current amount.

As shown in FIG. 5A, it is seen that the surge voltage is lower in the case of d=0.5 mm and the case of d=1 mm than that in the case of d=0.1 mm. Correspondingly, as shown in FIG. 5B, it is seen that the eddy current amount flowing through the copper film 12 in the case of d=0.5 mm and the case of d=1 mm is greater than that in the case of d=0.1 mm.

Also, as shown in FIG. 5A, the surge voltage is not greatly different between the case of d=0.5 mm and the case of d=1 mm. Correspondingly, as shown in FIG. 5B, the eddy current amount flowing through the copper film 12 is almost the same between the case of d=0.5 mm and the case of d=1 mm. Further, as shown in FIG. 5A, the surge voltage when the entirety of the electromagnetic coil housing 5 is made of copper is slightly greater than the case of d=0.5 mm and the case of d=1 mm, and it is seen that the surge voltage decreasing effect does not increase along with an increase in the copper part having low electric resistivity.

As shown in FIG. 5A, the current flowing through the electromagnetic coil 10 due to the surge voltage generated after the power supply to the electromagnetic coil 10 is broken is a high-frequency current. Therefore, corresponding to the current, the eddy current having approximately the same frequency flow also in the copper film 12. Almost all of a high-frequency current flowing through an electric conductor has such a property that it gathers in a certain area near the surface of the electric conductor. The thickness of the certain area at which the high-frequency current gathers from the surface of the electric conductor is represented by a skin depth of the frequency of the high-frequency current flowing through the electric conductor. Note that, the skin depth can be acquired $(1/\sqrt{(\pi f \mu \sigma)})$ from the magnetic permeability ($\mu$) and the conductivity ($\sigma$) of the electric conductor, and the frequency (f) of the current. That is, this value is determined from the type of the electric conductor and the frequency of the current. As shown in FIG. 5A, the high-frequency current flowing through the copper film 12 is almost 10 kHz. Because the skin depth of copper at the frequency 10 kHz is approximately 0.65 mm, it can be seen that a great eddy current flows, and it is possible to decrease the surge voltage generated in the electromagnetic coil 10 more, in the cases of d=0.5 mm and d=1 mm where the thickness of the copper film 12 is around 0.65 mm.

Also, in the present embodiment, the copper film 12 is installed in contact with (electrically conductive with) the inner surfaces of the groove part 5a of the electromagnetic coil housing 5. Thereby, if the thickness of the copper film 12 is less than the skin depth, the eddy current flows also through the electromagnetic coil housing 5. Because the material of the electromagnetic coil housing 5 is SPCC having large electric resistivity, the less eddy current amount flows than that in the copper film 12, as described above.

Therefore, it is preferable that the thickness of the copper film 12 is greater than or equal to the skin depth that is one at the frequency of the high-frequency current flowing through the electromagnetic coil 10 when the power supply to the electromagnetic coil 10 is broken. Note that, as described above, a high-frequency current flows gathering near the surface of an electric conductor. Therefore, it is considered that even if the entirety of the electromagnetic coil housing 5 is made of copper, no further advantageous effect can be acquired. The frequency band of the high-frequency current flowing through the electromagnetic coil 10 when the power supply to the electromagnetic coil 10 is broken is known through an experiment, an electromagnetic field analysis, or so.

As described above, according to the present embodiment, the copper film 12 is installed on all the inner surfaces of the groove part 5a of the electromagnetic coil housing 5. However, it is also possible that, for example, the copper film 12 is installed on one or two surfaces out of the two side walls and the bottom surface of the groove part 5a of the electromagnetic coil housing 5. It is also possible that a lid part is provided to the groove part 5a of the electromagnetic coil housing 5, and the copper film 12 is installed on the inner surface of the lid part. It is also possible that the copper film 12 installed on the inner surface of the lid part and the copper film 12 according to the present embodiment are combined, and the copper film 12 that is an electric conductor is placed to surround all of the inside surface, the outside surface and the two side surfaces of the electromagnetic coil 10.

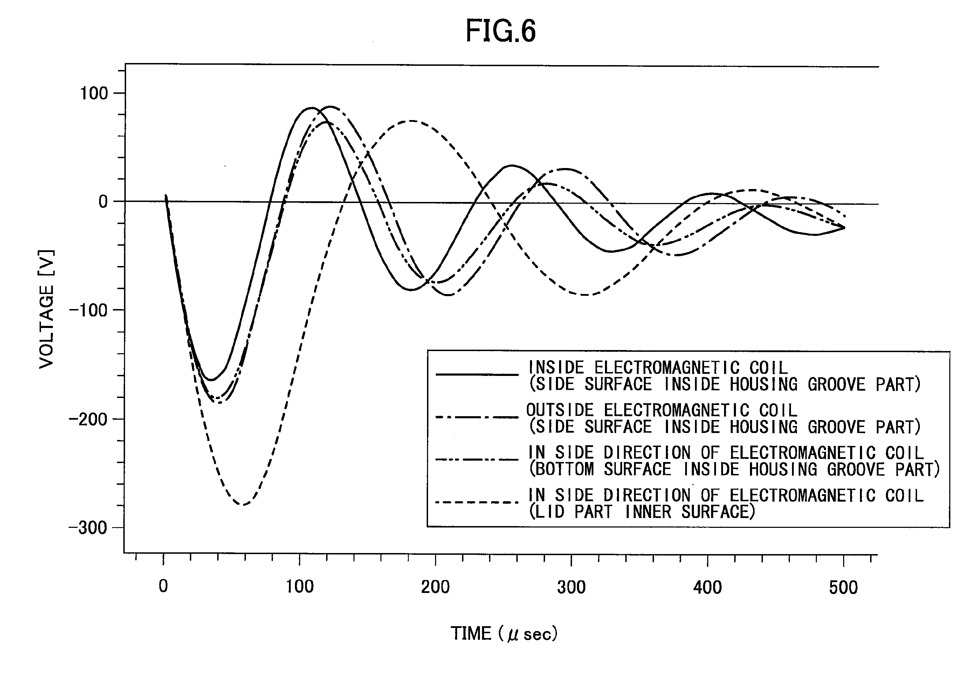

FIG. 6 shows relationships between the arrangement of the copper film 12 and the surge voltage generated in the electromagnetic coil 10. It shows changes in the voltages generated in the electromagnetic coil 10 with time after the power supply to the electromagnetic coil 10 is broken. The solid line shows a case where the copper film 12 is installed on the side wall of the groove part 5, inside the electromagnetic coil 10. The alternate long and short dash line shows a case where the copper film 12 is installed on the side wall of the groove part 5, outside the electromagnetic coil 10. The alternate long and two short dash line shows a case where the copper film 12 is installed on the bottom surface of the groove part 5a, in a side direction of the electromagnetic coil 10. The broken line shows a case where the lid part is provided to the groove part 5a, and the copper film 12 is installed on the inner surface of the lid part, in a side direction of the electromagnetic coil 10. Note that the thickness of all the copper film 12 is 0.7 mm. Inside the electromagnetic coil 10 means the electromagnetic coil axis side of the electromagnetic coil 10 shaped like a ring. Outside the electromagnetic coil 10 means, oppositely, the side away from the electromagnetic coil axis with respect to the electromagnetic coil 10.

As shown in FIG. 6, it is seen that the surge voltage is least when the copper film 12 is installed on the side wall of the groove part 5a, inside the electromagnetic coil 10. Therefore, when the copper film 12 is installed circumferentially with respect to the electromagnetic coil 10, it is preferable to install the copper film 12 at least inside the electromagnetic coil 10.

As described above, it is sufficient that the copper film 12 is installed in such a manner that the eddy current can flow around the same axis (the electromagnetic coil axis) as that of the current flowing through the electromagnetic coil 10. For example, as long as the copper film 12 installed on at least one surface out of the two side walls and the bottom surface of the annular groove part 5a of the electromagnetic coil housing 5 continues (is electrically conductive) in the circumferential direction of the groove part 5a, the copper film 12 installed on the other surfaces can have a part at which the copper film 12 is broken in the circumferential direction.

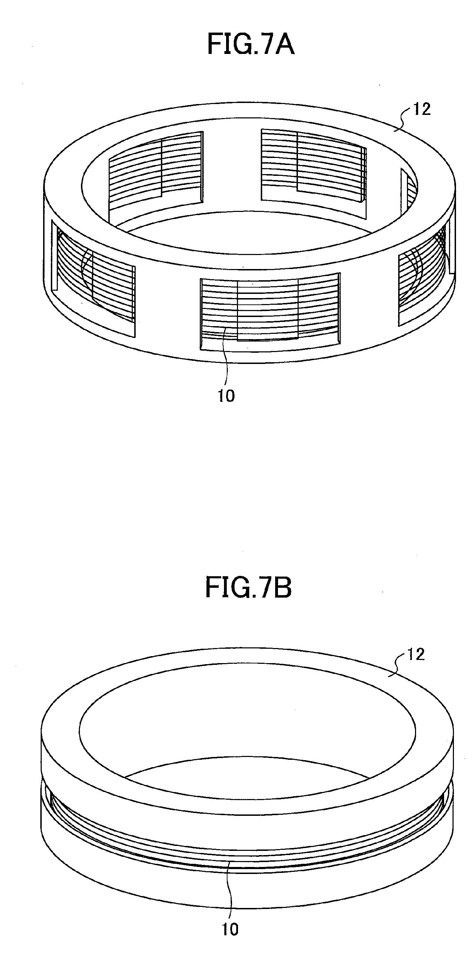

FIGs. 7 (FIGs. 7A and 7B) show schematic diagrams of the electromagnetic coils 10 and the copper films 12 of the electromagnetic clutches 1 according to variants 1 of the present embodiment.

In the example shown in FIG. 7A, the copper film 12 formed on the bottom surface of the annular groove part 5a and the inner surface of the annular lid part provided to the groove part 5a, in the side directions of the electromagnetic coil 10, is formed to be electrically conductive in the circumferential direction. There, the copper film 12 formed on the side walls of the annular groove part 5a, inside and outside the electromagnetic coil 10, is formed to be partially broken in the circumferential direction. In the example shown in FIG. 7B, the copper film 12 is installed on the inner surfaces (three sides) of the groove part 5a of the electromagnetic coil housing 5 and the inner surface of the lid part provided to the groove part 5a. There, a slit extending in the circumferential direction is formed on the copper film 12 installed on one of the side walls of the groove part 5a.

Thus, it is sufficient that at least the copper film 12 has a part that continues in the circumferential direction around the axis of the electromagnetic coil 10, even if the copper film 12 installed on the inner surfaces of the groove part 5a of the electromagnetic coil housing 5 and/or the inner surface of the lid part provided to the groove part 5a has a part where the copper film 12 is partially broken. As a result, it is possible to enable generation of the eddy current in the copper film 12 when the power supply to the electromagnetic coil 10 is broken, and thus, it is possible to decrease the surge voltage generated in the electromagnetic coil 10, as described above.

In the same way, even if, for example, there is a part in the circumferential direction of the annular groove part 5a of the electromagnetic coil housing 5 where the copper film 12 is not formed, it is sufficient to provide another way to make the copper film 12 electrically conductive in the circumferential direction around the axis of the electromagnetic coil 10.

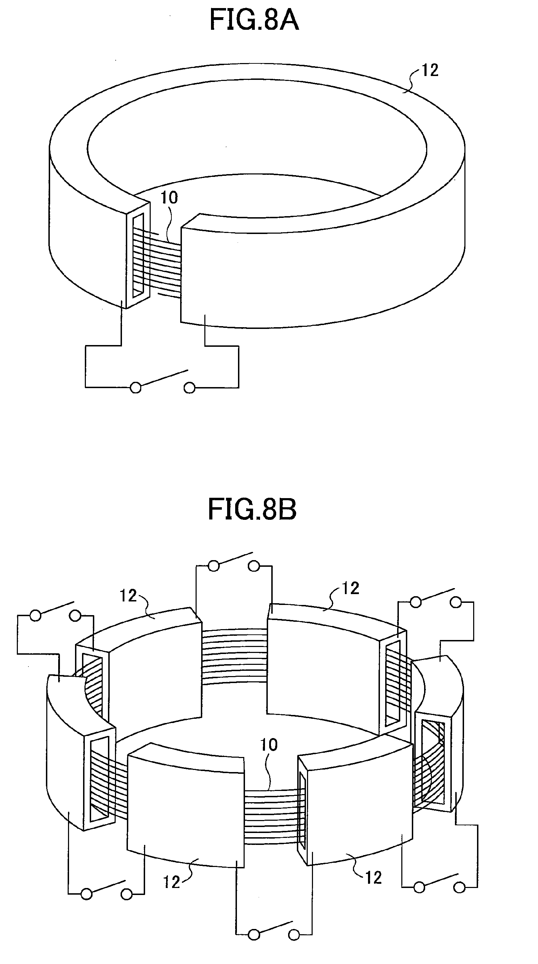

FIGs. 8 (FIGs. 8A and 8B) show schematic diagrams of the electromagnetic coils 10 and the copper films 12 of the electromagnetic clutches 1 according to variants 2 of the present embodiment.

In the example of FIG. 8A, the copper film 12 is installed on the inner surfaces (three sides) of the groove part 5a of the electromagnetic coil housing 5 and the inner surface of the lid part provided to the groove part 5a. There, there is a part in the circumferential direction of the annular groove part 5a and the lid part where the copper film 12 is not installed at all (a broken part). The broken part becomes electrically conductive by a switch. In the example shown in FIG. 8B, the number of broken parts in the example of FIG. 8A is increased (in the drawing, the six broken parts). In the same way as FIG. 8A, these broken parts become electrically conductive by switches. For example, by causing such a control to be carried out that the above-mentioned switch(es) is(are) turned on when the power supply to the electromagnetic coil 10 is broken, it is possible to enable generation of the eddy current in the copper film 12, as described above.

Thus, even if the copper film 12 installed on the inner surfaces of the groove part 5a of the electromagnetic coil housing 5 and/or the inner surface of the lid part provided to the groove part 5a has a part where the copper film 12 is broken in the circumferential direction around the axis of the electromagnetic coil 10, it is sufficient that a switch(es) or such enables the copper film 12 to be electrically conductive in the circumferential direction. Thus, it is possible to enable generation of the eddy current in the copper film 12 when the power supply to the electromagnetic coil 10 is broken and it is possible to decrease the surge voltage generated in the electromagnetic coil 10, as described above.

[Second Embodiment]

Next, a second embodiment will be described.

In the first embodiment, the electric conductor (the copper film 12) is installed on the inner surfaces of the groove part 5a of the electromagnetic coil housing 5. However, it is also possible that the electric conductor (the copper film 12) is placed apart from (electrically insulated from) the electromagnetic coil housing 5.

The present embodiment is different from the first embodiment mainly in that, in the electromagnetic clutch 1, the copper film 122 (the electric conductor) is placed apart from (electrically insulated from) the electromagnetic coil housing 5. Now, description will be made focusing on the differences from the first embodiment while the same reference numerals are given to elements.

According to the present embodiment, the general sectional view showing the structure of the electromagnetic clutch 1 is shown in FIG. 1, in the same way as that of the first embodiment. Therefore, detailed description concerning the structure of the whole electromagnetic clutch 1 will be omitted.

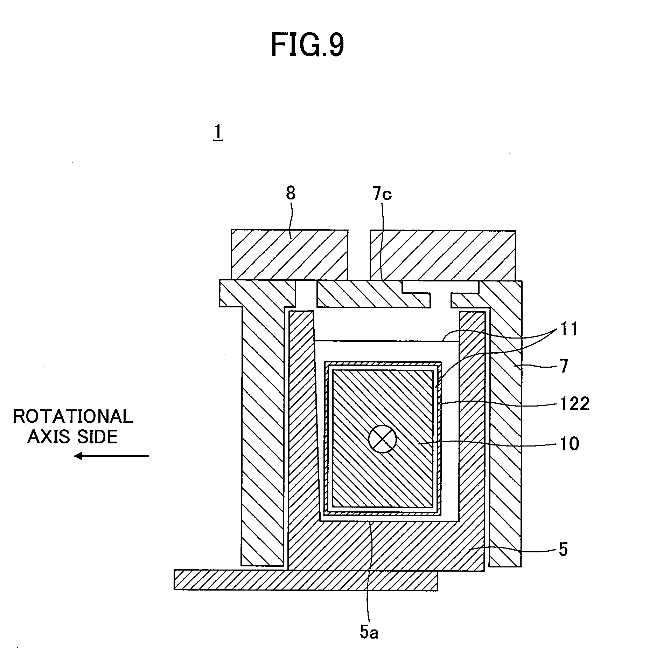

FIG. 9 is a sectional view showing a detailed structure around the electromagnetic coil 10 of the electromagnetic clutch 1 according to the present embodiment. Note that, it is assumed that the rotational axis of the rotor 7 is present in the left direction of the drawing. For the purpose of simplification, the pulley grooves 7b of the rotor 7 are omitted in the drawing.

As shown in FIG. 9, the copper film 122 is installed apart from the four sides of the electromagnetic coil 10 by predetermined distances to surround the four sides of the electromagnetic coil 10 (inside, outside and two side directions). Also the copper film 122 and the electromagnetic coil 10 are electrically insulated, and the insulating member 11 installed. The copper film 122 is also apart from the inner surfaces of the groove part 5a of the electromagnetic coil housing 5, and is electrically insulated from the inner surfaces of the groove part 5a of the electromagnetic coil housing 5 via the insulating member 11. The copper film 122 can be formed as a result of the electromagnetic coil 10 being coated with the insulating member 11, and then, being wound with a copper film tape, or so.

According to the present embodiment, the copper film 122 is installed to be ring-shaped around the same axis as that of the electromagnetic coil 10 (the electromagnetic coil axis). Therefore, in the same way as the first embodiment, it is possible to generate the eddy current flowing in the circumferential direction around the same axis as that of the current flowing through the electromagnetic coil 10 (the electromagnetic coil axis) in the copper film 122 when the power supply to the electromagnetic coil 10 is broken. Therefore, even if the copper film 122 is installed apart from the electromagnetic coil housing 5 as in the electromagnetic clutch 1 according to the present embodiment, it is possible to decrease the surge voltage generated in the electromagnetic coil 10. Thus, the present embodiment has the same functions and advantageous effects as those of the first embodiment.

Note that, in the same way as the first embodiment, for example, it is possible to install the copper film 122 in one, two, or three directions out of the inside, the outside and the two side directions of the electromagnetic coil 10. Also, in this case, as described for the first embodiment, it is preferable that the copper film 122 is installed at least inside the electromagnetic coil 10. Also, in the same way as the variants 1 of the first embodiment, as long as the copper film 122 installed at least in one direction out of the copper film 122 installed on the four sides of the electromagnetic coil 10 continues (is electrically conductive) in the circumferential direction around the axis of the electromagnetic coil 10, for example, the copper film 122 in the other directions can have a part where the copper film 122 is broken in the circumferential direction. Also, in the same way as the variants 2 of the first embodiment, even if a part is present in the circumferential direction around the axis of the electromagnetic coil 10 where the copper film 122 is not formed out of the copper film 122 installed on the four sides of the electromagnetic coil 10, it is sufficient to provide another way to make the copper film 122 electrically conductive in the circumferential direction.

The copper film 122 can be installed to surround at least one strand of the coil wire 10a included in the electromagnetic coil 10 in a cross-sectional view of the strand.

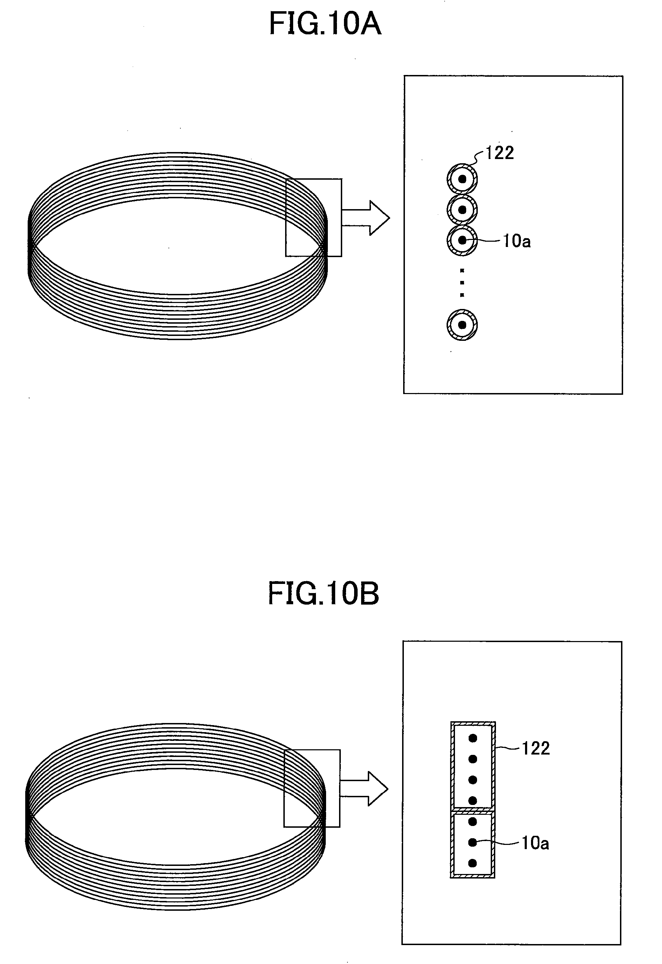

FIGs. 10 (FIGs. 10A and 10B) show schematic diagrams of the electromagnetic coils 10 and the copper films 12 of the electromagnetic clutches 1 according to variants of the present embodiment.

In the example of FIG. 10A, the copper film 122 is installed to surround the strands, one by one, of the coil wire 10a included in the electromagnetic coil 10 in a cross-sectional view of the strands. Note that the coil wire 10a is coated with an insulating material, for example, polyethylene resin or such around it. The coil wire 10a can be wound with, for example, a copper foil, after undergoing the insulation coating. In the example of FIG. 10B, the copper film 122 is installed to surround a plurality of strands of the coil wire 10a included in the electromagnetic coil 10 in a cross-sectional view of the strands. In the same way as the case of FIG. 10A, the coil wire 10a can be wound with, for example, a copper foil, after undergoing the insulation coating.

Thus, also in a case where the copper film 122 is installed to surround the coil wire 10a included in the electromagnetic coil 10, it is sufficient to install the copper film 122 in such a manner as to be electrically conductive in the circumferential direction around the electromagnetic coil axis of the electromagnetic coil 10. Thereby, it is possible to enable generation of the eddy current around the same axis as that of the current flowing through the coil wire 10a (the electromagnetic coil axis), and, as described above, it is possible to decrease the surge voltage generated in the electromagnetic coil 10.

[Third Embodiment]

Next, a third embodiment will be described.

The electromagnetic clutch 1 according to the present embodiment is different from the first embodiment in that the copper film 12 is not installed, and the material of the electromagnetic coil housing 5 is changed to one having lower electric resistivity. Now, description will be made focusing on the differences from the first embodiment while the same reference numerals are given to similar elements.

According to the present embodiment, the general sectional view showing the structure of the electromagnetic clutch 1 is shown in FIG. 1, in the same way as that of the first embodiment. Therefore, detailed description concerning the structure of the whole electromagnetic clutch 1 will be omitted.

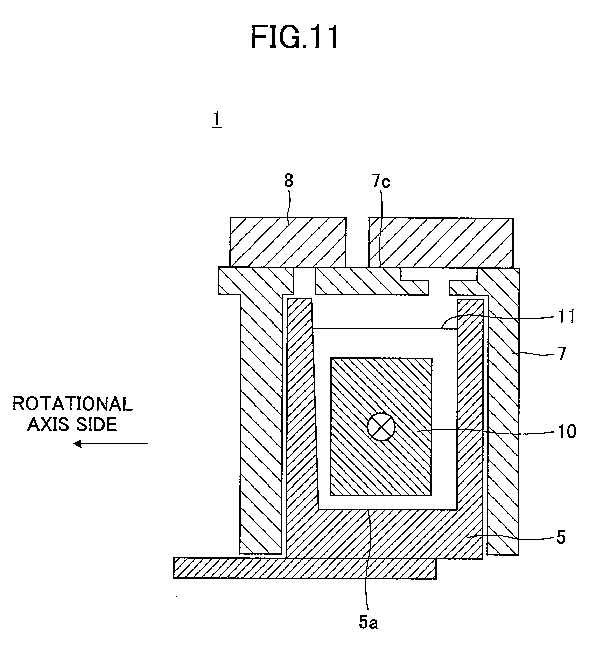

FIG. 11 is a sectional view showing a detailed structure around the electromagnetic coil 10 of the electromagnetic clutch 1 according to the present embodiment. Note that, it is assumed that the rotational axis of the rotor 7 is present in the left direction of the drawing. For the purpose of simplification, the pulley grooves 7b of the rotor 7 are omitted in the drawing.

As shown in FIG. 11, different from the first embodiment, the copper film 12 is not installed. That is, the electromagnetic clutch 1 according to the present embodiment is a common one including the electromagnetic coil housing 5 into which the electromagnetic coil 10 that is a stator is inserted, the rotor 7, the clutch plate 8, and so forth. What is different from the electromagnetic clutch 1 according to the first embodiment is that, as described above, the electric resistivity of the material of the electromagnetic coil housing 5, the rotor 7, and the clutch plate 8 is changed to a lower one (while the permeability is kept to have the same B-H characteristic as SPCC). The electric resistivity of the material of the electromagnetic coil housing 5, the rotor 7, and the clutch plate 8 according to the present embodiment is $1.673\times10^{-8}\Omega$/m (the electric resistivity of the SPCC of the electromagnetic coil housing 5, the rotor 7, and the clutch plate 8 according to the first embodiment is $1.340\times10^{-7}\ \Omega$/m).

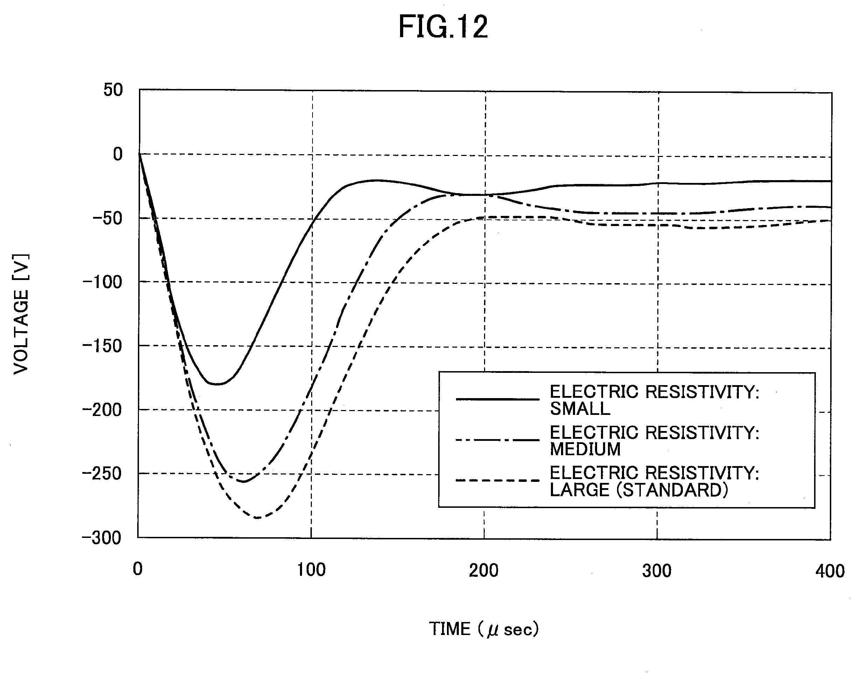

FIG. 12 shows relationships between the electric resistivity of the electromagnetic coil housing 5, the rotor 7, and the clutch plate 8, and the surge voltage generated in the electromagnetic coil 10, and shows a change in the voltage generated in the electromagnetic coil 10 with time after the power supply to the electromagnetic coil 10 is broken. The solid line shows a case of the electromagnetic clutch 1 according to the present embodiment. In the drawing, it is indicated that "the electric resistivity: small". The alternate long and short dash line shows a case where SPCC having the electric resistivity of $8.000\times10^{-8}\Omega/m$ is used in the electromagnetic coil housing 5, the rotor 7, and the clutch plate 8, and it is indicated in the drawing that "the electric resistivity: medium". The broken line shows a case where the same SPCC (the electric resistivity $1.340\times10^{-7}\ \Omega/m$) as that of the electromagnetic coil housing 5, the rotor 7, and the clutch plate 8 according to the first embodiment is used, and it is indicated in the drawing that "the electric resistivity: large (standard)".

As shown in FIG. 12, it is seen that, by reducing the electric resistivity of the electromagnetic coil housing 5, the rotor 7, and the clutch plate 8, the surge voltage generated in the electromagnetic coil 10 decreases. Actually, it is seen that it is possible to decrease the surge voltage to less than or equal to approximately 200 V with the electromagnetic coil housing 5, the rotor 7, and the clutch plate 8 according to the present embodiment (solid line), while the surge voltage of approximately 300 V is generated with the SPCC of the electromagnetic coil housing 5, the rotor 7, and the clutch plate 8 according to the first embodiment (the broken line).

As described for the first embodiment, it is possible to generate the eddy currents flowing through the electromagnetic coil housing 5, the rotor 7, and the clutch plate 8 that are electric conductors around the electromagnetic coil 10 in the circumferential direction around the same axis as that of the current flowing through the electromagnetic coil 10 (the electromagnetic coil axis). According to the present embodiment, it is possible to increase the eddy current amount generated when the power supply to the electromagnetic coil 10 is broken, by reducing the electric resistivity of the electric conductors (the electromagnetic coil housing 5, the rotor 7, and the clutch plate 8) where the eddy currents are generated. Thereby, in the same way as the first embodiment, it is possible to make gentler the decrease in the magnetic fluxes generated due to the fact that the current flows through the electromagnetic coil 10. Thus, it is possible to decrease the surge voltage generated in the electromagnetic coil 10 due to the magnetic fluxes generated depending on the eddy current.

[Fourth Embodiment]

Next, a fourth embodiment will be described.

The electromagnetic clutch 1 according to the present embodiment is different from the first embodiment mainly in that the copper film 12 is not installed, and the material of the electromagnetic coil housing 5 is changed to one having a smaller saturation magnetization value than that of SPCC. Now, description will be made focusing on the differences from the first embodiment while the same reference numerals are given to similar elements.

According to the present embodiment, the general sectional view showing the structure of the electromagnetic clutch 1 is shown in FIG. 1, in the same way as that of the first embodiment. Therefore, detailed description concerning the structure of the whole electromagnetic clutch 1 will be omitted.

FIG. 11 is a sectional view showing a detailed structure around the electromagnetic coil 10 of the electromagnetic clutch 1 according to the present embodiment. Because the structure is the same as that of the third embodiment described above, detailed description will be omitted.

According to the present embodiment, as described above, the material of the electromagnetic coil housing 5, the rotor 7, and the clutch plate 8 is changed into SUS430 having a lower saturation magnetization value than SPCC. Note that, SUS430 is a ferrite stainless steel prescribed in JIS.

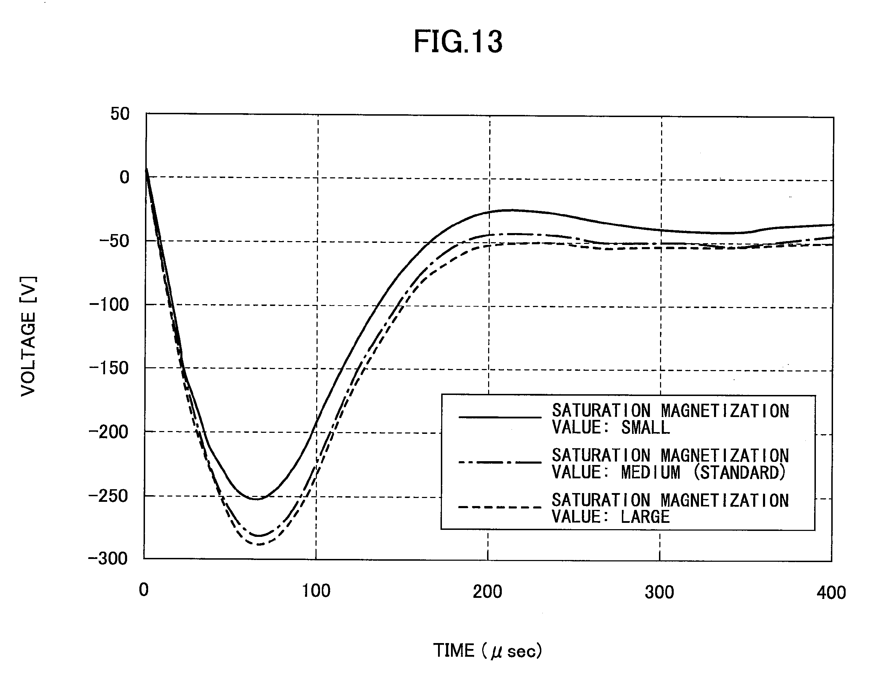

FIG. 13 shows relationships between the saturation magnetization value of the electromagnetic coil housing 5, the rotor 7, and the clutch plate 8, and the surge voltage generated in the electromagnetic coil 10, and shows a change in the voltage generated in the electromagnetic coil 10 with time when the power supply to the electromagnetic coil 10 is broken. The solid line shows a case of the electromagnetic clutch 1 according to the present embodiment, and it is indicated in the drawing that "saturation magnetization value: small". The alternate long and short dash line shows a case of using SPCC in the electromagnetic coil housing 5, the rotor 7, and the clutch plate 8 according to the first embodiment, and it is indicated in the drawing that "saturation magnetization value: medium". The broken line shows a case where SUY-1 having a higher saturation magnetization value than SPCC is used in the electromagnetic coil housing 5, the rotor 7, and the clutch plate 8, and it is indicated in the drawing that "saturation magnetization value: large". Note that SUY-1 is a soft magnetic iron sheet prescribed in JIS. The graphs in FIG. 13 are those under a condition where the electric resistivity of any one of SPCC, SUS430, and SUY-1 is the same ($1.34\times10^{-7}\ \Omega/m$).

As shown in FIG. 13, it is seen that, as the saturation magnetization values of the electromagnetic coil housing 5, the rotor 7, and the clutch plate 8 are reduced, the surge voltages generated in the electromagnetic coil 10 decrease. Actually, in the case of the electromagnetic clutch 1 (the solid line according to the present embodiment using SUS430 in the electromagnetic coil housing 5, the rotor 7, and the clutch plate 8 having the least saturation magnetization value), the surge voltage generated in the electromagnetic coil 10 is least approximately 250 V.

When using such a material as that according to the present embodiment having less saturation magnetization, the magnetic fluxes (the initial magnetic fluxes) passing through the electromagnetic coil 10 when the direct current is broken (when the power supply to the electromagnetic coil 10 is broken) decrease although the easiness in the eddy current flowing does not change. Thereby, in the same way as the first embodiment, it is possible to make gentler the decrease in the magnetic fluxes generated due to the fact that the current flows through the electromagnetic coil 10. Thus, it is possible to decrease the surge voltage generated in the electromagnetic coil 10 due to the magnetic fluxes generated depending on the eddy current.

Note that, according to the present embodiment, the material of the electromagnetic coil housing 5 is changed into SUS430 having a lower saturation magnetization value than that of a commonly used SPCC. However, it is also possible to replace the copper films 12 and 122 according to the first and second embodiments with electric conductors having less saturation magnetization values than that of the electromagnetic coil housing 5 (SPCC). Also in this case, the first and second embodiment can have the same functions and advantageous effects as those of the present embodiment.

Thus, the embodiments of the present invention have been described in detail. However, the present invention is not limited to these specific embodiments. It is possible to variously change or modify them within the scope of the present invention claimed in the claims.

In the first embodiment described above, the metal film installed on the inner surfaces of the groove part 5a of the electromagnetic coil housing 5 is the copper film 12. However, it is also possible to use any metal as long as it is an electric conductor having smaller electric resistivity than that of SPCC that is the material of the electromagnetic coil housing 5 and so forth. Thereby, in same way as the case of the copper film 12, it is possible to increase the amount of the eddy current flowing through the metal film when the power supply to the electromagnetic coil 10 is broken, and it is possible to decrease the surge voltage generated in the electromagnetic coil 10. As the metal film, for example, aluminum or such, can be used.

In the same way, also in the second embodiment described above, although the metal film installed to surround the electromagnetic coil 10 is the copper film 122, any metal can be used as long as it is an electric conductor having smaller electric resistivity than that of SPCC that is the material of the electromagnetic coil housing 5 and so forth. Thereby, in the same way as the case of the copper film 122, it is possible to increase the amount of the eddy current flowing through the metal film when the power supply to the electromagnetic coil 10 is broken, and it is possible to decrease the surge voltage generated in the electromagnetic coil 10. For example, the metal film made of aluminum can be used, and it is possible to form it by winding an aluminum foil on the electromagnetic coil 10 having undergone insulating coating with the insulating member 11.

Also, in each of the above-described embodiments, the description has been made for the case where the technology to decrease the surge voltage generated in the electromagnetic coil 10 is applied to the electromagnetic clutch 1. However, this technology can also be used for any electromagnetic coil device. For example, it is possible to use this technology in another electromagnetic connecting device such as an electromagnetic brake, or an electromagnetic coil device other than an electromagnetic connecting device, such as a solenoid valve.

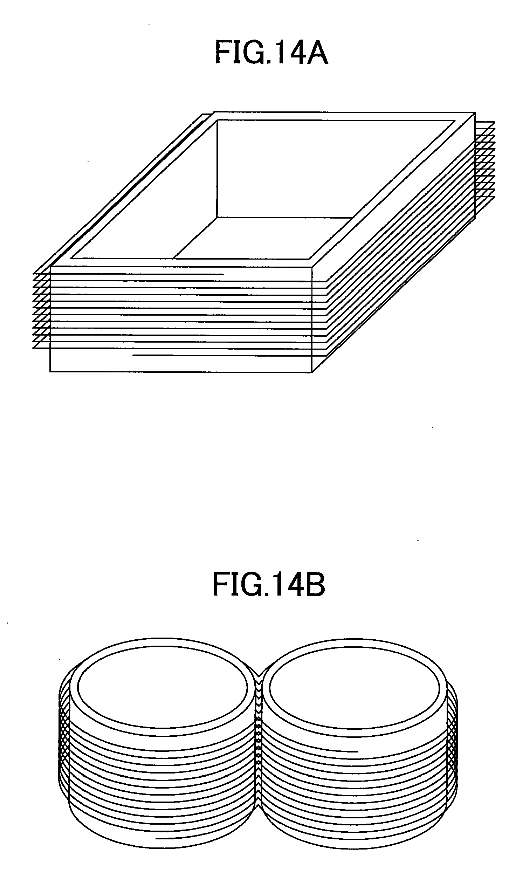

Also, in each of the above-described embodiments, the electromagnetic coil 10 is shaped as a ring. However, as long as the operations or so of the electromagnetic coil device are not obstructed, it is possible to change the shape of the electromagnetic coil 10 into a rectangular coil shown in FIG. 14A, a gourd-shaped coil shown in FIG. 14B, or such, for example.

Also, for each of the above-described embodiments, the functions and advantageous effects from decreasing the surge voltage of the electromagnetic coil 10 have been described for when the power supply to the electromagnetic coil 10 is broken as an example. However, each of the above-described embodiment has the same functions and advantageous effects in a case where a sharp variation occurs in the current flowing through the electromagnetic coil 10 due to a fact that, for example, the power supply to the electromagnetic coil 10 is broken. That is, in each of the above-described embodiments, the electric conductors (the copper film 12 or 122, the electromagnetic coil housing 5, the rotor 7, and the clutch plate 8) are installed in such a manner that the eddy currents flow there when the current flowing through the electromagnetic coil 10 changes. Thereby, it is possible to decrease the surge voltage generated in the electromagnetic coil 10 when the current flowing through the electromagnetic coil 10 sharply changes.

The present international application claims the priority of Japanese Patent Application No. 2013-148848, filed on July 17, 2013, and the entire contents of Japanese Patent Application No. 2013-148848 are incorporated in the present international application.

DESCRIPTION OF REFERENCE NUMERALS

1 ELECTROMAGNETIC CLUTCH (ELECTROMAGNETIC COIL DEVICE)
5 ELECTROMAGNETIC COIL HOUSING (FIRST ELECTRIC CONDUCTOR)
7 ROTOR (FIRST ELECTRIC CONDUCTOR)
8 CLUTCH PLATE (FIRST ELECTRIC CONDUCTOR)

10 ELECTROMAGNETIC COIL
10a COIL WIRE
12, 122 COPPER FILM (SECOND ELECTRIC CONDUCTOR, THE METAL FILM)

## Claims

**1.** An electromagnetic coil device comprising:

an electromagnetic coil in which a coil wire is wound;
a first electric conductor installed around the electromagnetic coil, the first electric conductor being electrically insulated from the electromagnetic coil; and
a second electric conductor installed in the first electric conductor or installed between the first electric conductor and the electromagnetic coil, the second electric conductor being electrically insulated from the electromagnetic coil, and being installed in such a manner as to have an eddy current flowing therethrough when a current flowing through the electromagnetic coil changes.

**2.** The electromagnetic coil device as claimed in claim 1, wherein
the second electric conductor has less electric resistivity than that of the first electric conductor.

**3.** The electromagnetic coil device as claimed in claim 1, wherein
the second electric conductor has a less saturation magnetization value than that of the first electric conductor.

**4.** The electromagnetic coil device as claimed in claim 1, wherein
the second electric conductor is installed at least inside the electromagnetic coil.

**5.** The electromagnetic coil device as claimed in claim 1, wherein
the second electric conductor surrounds at least one strand out of the coil wire in a cross-sectional view of the strand.

**6.** The electromagnetic coil device as claimed in claim 1, wherein
the second electric conductor is a metal film installed adjacent to the first electric conductor between the electromagnetic coil and the first electric conductor.

**7.** The electromagnetic coil device as claimed in claim 6, wherein
the metal film has a thickness greater than a skin depth that is one at a frequency of a current flowing through the electromagnetic coil when power supply to the electromagnetic coil is broken.

FIG.1

2
1
11
9
6
3a
8
7c
7a
7b
10
7
4
5a
5
4a
3

# FIG.2

1
8
7c
11
7
12
10
5
5a
ROTATIONAL
AXIS SIDE

# FIG.3A

MAGNETIC FLUXES CREATED BY
DIRECT CURRENT FLOWING THROUGH COIL
(CONSTANT)
8
7
10
5
CURRENT FLOWING THROUGH COIL

# FIG.3B

MAGNETIC FLUXES CREATED BY
CURRENT FLOWING THROUGH COIL
(DECREASE)
CURRENT IN COIL
DECREASES
WITH TIME
8
7
10
5
MAGNETIC FLUXES CREATED BY
EDDY CURRENTS OF PERIPHERAL
MAGNETIC BODIES TO
HINDER CHANGE OF MAGNETIC FLUXES

# FIG.3C

5(5a)
10
EDDY CURRENT

# FIG.4

100
0
−100
−200
−300
VOLTAGE [V]
0
100
200
300
400
TIME (μ sec)
WITH COPPER FILM
WITHOUT COPPER FILM

# FIG.5A

50
0
-50
-100
VOLTAGE [V]
0
100
200
300
400
TIME (μ sec)
d=1 mm
d=0.5 mm
d=0.1 mm
(FOR REFERENCE) CASE WHERE ENTIRE ELECTROMAGNETIC COIL HOUSING 5 IS MADE OF COPPER

# FIG.5B

80
70
60
50
40
30
20
10
0
CURRENT DENSITY [μA/m²]
0
0.2
0.4
0.6
0.8
1
1.2
DISTANCE [mm]
d=1 mm
d=0.5 mm
d=0.1 mm
INTEGRAL VALUE IS EQUAL TO TOTAL EDDY CURRENT

FIG.6
INSIDE ELECTROMAGNETIC COIL (SIDE SURFACE INSIDE HOUSING GROOVE PART)
OUTSIDE ELECTROMAGNETIC COIL (SIDE SURFACE INSIDE HOUSING GROOVE PART)
IN SIDE DIRECTION OF ELECTROMAGNETIC COIL (BOTTOM SURFACE INSIDE HOUSING GROOVE PART)
IN SIDE DIRECTION OF ELECTROMAGNETIC COIL (LID PART INNER SURFACE)
VOLTAGE [V]
100
0
-100
-200
-300
TIME ($\mu$ sec)
0
100
200
300
400
500

FIG.7A

12
10

FIG.7B

12
10

FIG.8A

12
10

FIG.8B

12
12
10
12
12

# FIG.9

1
8
7c
11
7
122
10
5
5a
ROTATIONAL
AXIS SIDE

FIG.10A

122
10a

FIG.10B

122
10a

FIG.11

1
8
7c
11
7
ROTATIONAL AXIS SIDE
10
5
5a

VOLTAGE [V]
50
0
-50
-100
-150
-200
-250
-300
0
100
200
300
400
TIME (μ sec)
ELECTRIC RESISTIVITY: SMALL
ELECTRIC RESISTIVITY: MEDIUM
ELECTRIC RESISTIVITY: LARGE (STANDARD)

FIG.12

FIG.13

SATURATION MAGNETIZATION VALUE: SMALL
SATURATION MAGNETIZATION VALUE: MEDIUM (STANDARD)
SATURATION MAGNETIZATION VALUE: LARGE
50
0
-50
-100
-150
-200
-250
-300
VOLTAGE [V]
0
100
200
300
400
TIME (μsec)

FIG.14A

FIG.14B

**INTERNATIONAL SEARCH REPORT**

International application No. PCT/JP2014/068914

A. CLASSIFICATION OF SUBJECT MATTER
*H01F7/06*(2006.01)i, *H01F7/08*(2006.01)i

According to International Patent Classification (IPC) or to both national classification and IPC

B. FIELDS SEARCHED

Minimum documentation searched (classification system followed by classification symbols)
H01F7/06, H01F7/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 8-8114 A (Central Japan Railway Co.), 12 January 1996 (12.01.1996), entire text; all drawings (Family: none) | 1-6<br>7 |
| X<br>A | JP 6-77050 A (Toshiba Corp.), 18 March 1994 (18.03.1994), entire text; all drawings (Family: none) | 1-6<br>7 |
| X<br>A | JP 1-169907 A (Siemens AG.), 05 July 1989 (05.07.1989), entire text; all drawings & US 4881035 A & EP 317853 A1 & DE 3864385 C & DE 3864385 A | 1-5<br>6-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 October, 2014 (06.10.14) | 21 October, 2014 (21.10.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2014/068914

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2005-150264 A (Kabushiki Kaisha IQ Four), 09 June 2005 (09.06.2005), entire text; all drawings (Family: none) | 1-5<br>6-7 |
| X<br>A | JP 8-264347 A (Toshiba Corp.), 11 October 1996 (11.10.1996), entire text; all drawings (Family: none) | 1-5<br>6-7 |
| P,A | WO 2013/175928 A1 (Toshiba Corp.), 28 November 2013 (28.11.2013), entire text; all drawings & JP 2014-388 A & CN 103561646 A | 1-7 |
| A | JP 2-159246 A (Hitachi, Ltd.), 19 June 1990 (19.06.1990), entire text; all drawings & US 5113166 A | 1-7 |
| A | JP 63-229704 A (President of Kanazawa University), 26 September 1988 (26.09.1988), entire text; all drawings & US 4855703 A & EP 283150 A1 & DE 3868094 A & DE 283150 T & DE 3868094 C | 1-7 |
| A | JP 7-127662 A (Nippondenso Co., Ltd.), 16 May 1995 (16.05.1995), entire text; all drawings (Family: none) | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 10037978 A
- JP 2013 A
- JP 148848 A
- JP 2013148848 A